# EUROPÄISCHE PATENTSCHRIFT

(11) **EP 1 019 235 B1**
(45) Veröffentlichungstag und Bekanntmachung des Hinweises auf die Patenterteilung: **01.12.2004**
(21) Anmeldenummer: 98947554.6
(22) Anmeldetag: 28.09.1998
(51) Int. Cl.: B29C 45/16

(54) **VERFAHREN ZUR HERSTELLUNG VON VERBUNDKÖRPERN**
METHOD FOR PRODUCING COMPOSITE BODIES
PROCEDE DE PRODUCTION DE CORPS COMPOSITES

(30) Priorität: 30.09.1997 DE 19743134
(43) Veröffentlichungstag der Anmeldung: 19.07.2000
(73) Patentinhaber: Ticona GmbH, 65451 Kelsterbach (DE)
(72) Erfinder: ZIEGLER, Ursula, D-55130 Mainz (DE); KURZ, Klaus, D-65451 Kelsterbach (DE); REIL, Frank, D-64579 Gernsheim (DE)
(86) Internationale Anmeldenummer: PCT/EP1998/006152
(87) Internationale Veröffentlichungsnummer: WO 1999/016605

(56) Entgegenhaltungen:
- EP-A- 0 432 888
- DE-A- 3 628 562
- GB-A- 2 160 146
- JP-A- 1 110 918
- US-A- 4 694 042
- US-A- 5 129 694
- US-A- 5 212 237
- DATABASE WPI Section Ch, Week 9234 Derwent Publications Ltd., London, GB; Class A32, AN 92-281485 XP002087526 & JP 04 193511 A (HITACHI CABLE LTD) , 13. Juli 1992

## Beschreibung

Die Erfindung betrifft ein Verfahren zur Herstellung von Polyacetal-Elastomer-Verbundkörpem aus einer Kombination des technischen Werkstoffs Polyoxymethylen mit direkt angeformten Funktionselementen aus einem oder mehreren thermoplastischen Elastomeren und deren Verwendung.

Der technische Werkstoff Polyacetal, d.h. Polyoxymethylen (POM), hat ausgezeichnete mechanische Eigenschaften und ist darüber hinaus im allgemeinen auch widerstandsfähig gegen alle üblichen Lösemittel und Kraftstoffe. Formteile aus Polyoxymethylen werden daher u.a. im Automobilbau, insbesondere auch in kraftstoffführenden Systemen eingesetzt. Aufgrund der guten Festigkeit und Härte verbunden mit einer ausgezeichneten Rücksteltelastizität finden Formteile aus Polyacetal in allen Bereichen des täglichen Lebens sehr häufig Anwendung für Schnapp-Verbindungen, insbesondere Clips.
Die ausgezeichneten Gleit-Reib-Eigenschaften begründen den Einsatz von Polyoxymethylen für viele bewegliche Teile, z.B. Getriebeteile, Umlenkrollen, Zahnräder oder Verstellhebel. Aufgrund der sehr guten mechanischen Beständigkeit und Resistenz gegen Chemikalien werden auch Gehäuse und Tastaturen aus Polyoxymethylen hergestellt.

POM weist aber bei Raumtemperatur einen niedrigen mechanischen Dämpfungsfaktor auf, was in einigen Anwendungsfällen den Einsatz von weichen Dämpfungselementen erforderlich macht. Beim Einbau von Formteilen aus Polyoxymethylen ist zudem oftmals an Verbindungsstellen eine Abdichtung erforderlich. Die hohe Oberflächenhärte von Formteilen aus POM und der niedrige Gleitreibungskoeffizient von POM können zu einem Verrutschen von aufliegenden Gegenständen führen und die Bedienungssicherheit beispielsweise von Schaltelementen und Bedienungselementen aus POM, einschränken.

Es werden andererseits auch immer öfter Kombinationen aus harten und weichen Werkstoffen eingesetzt, um die besonderen Eigenschaften dieser Werkstoffe miteinander zu kombinieren. Der harte Werkstoff soll dabei die Festigkeit der Bauteile bewirken, der weiche Werkstoff übernimmt aufgrund seiner elastischen Eigenschaften Funktionen zur Dichtung oder Vibrations- und Geräuschdämpfung oder bewirkt eine Veränderung der Oberflächenhaptik. Wichtig bei diesen Anwendungen ist eine ausreichende Haftung zwischen der harten und weichen Komponente.

Bislang werden entweder Dichtungen und Dämpfungselemente separat bereitgestellt und üblicherweise in einem zusätzlichen Arbeitsschritt mechanisch verankert oder verklebt, was zusätzliche Arbeit und teilweise erhebliche Zusatzkosten verursacht. Eine neuere und wirtschaftlichere Methode ist der Mehrkomponentenspritzguß. Hierbei wird z.B. eine zweite Komponente auf eine vorgeformte erste Komponente aufgespritzt. Die erreichbare Haftung zwischen den beiden Komponenten ist für dieses Verfahren von großer Bedeutung. Im Mehrkomponentenspritzguß kann diese Haftung zwar in formschlüssigen Verbindungen durch Anbringen von Hinterschnitten oft noch verbessert werden. Jedoch ist eine gute Grundhaftung durch chemische Affinität zwischen den ausgewählten Komponenten oft Voraussetzung für deren Einsatz.

Allgemein bekannt sind z.B. nach dem Mehrkomponentenspritzguß hergestellte Kombinationen aus Polypropylen (PP) und Polyolefinelastomeren oder Styrol/Olefinelastomeren, Polybutylenterephthalat (PBT) mit Polyesterelastomeren oder Styrol/Olefinelastomeren. Auch Polyamide zeigen Haftung zu sehr vielen Weichkomponenten.

Bekannt sind auch Formteile aus Polyacetal mit direkt angeformten Funktionselementen, die unter Verwendung nicht vernetzter Kautschuke hergestellt wurden (DE-C 44 39 766). Die Haftfestigkeit derartiger Verbundkörper ist jedoch noch nicht zufriedenstellend.

Eine weitere Veröffentlichung betrifft ebensolche Verbundkörper, die aus u.a. einem Polyacetal, einem Kautschuk-Copolymerisat, einem verstärkenden Füllstoff, einem Vernetzer und gegebenenfalls weiteren üblichen Zuschlagstoffen bestehen (DE-A 9611272). Eine besonders gute Haftung der Polymerkomponenten wird durch die Vulkanisation des Kautschukanteils erreicht. Allerdings wird dieser zusätzliche Schritt wegen der erhöhten Vulkanisations-Temperaturen und -Zeiten nachteilig bewertet.

Es ist auch möglich, das Dämpfungselement eines Schließkolbens eines Kraftfahrzeug-Türverschlusses mit Bereichen unterschiedlicher Härte und Zugfestigkeit zu versehen (DE-C 42 24 145). Dabei wird für den Bereich geringerer Härte zuerst ein thermoplastischer Kautschuk eingesetzt, auf den für den Bereich größerer Härte ein Polyacetal-Kunststoff aufgebracht wird. Durch diese Verfahrensweise wird zwar eine gute Haftung erreicht, jedoch ist dieses Verfahren aufgrund der geringen Dimensionsfestigkeit des thermoplastischen Kautschuks wenig praktikabel.

Thermoplastische Elastomere sollen mit Thermoplasten im Overmouldingverfahren kombinierbar sein, wobei z.B. Polyurethan-Elastomere (TPE-U) eine Haftung an POM aufweisen (Kunststoffe 84 (1994) S. 709). Wird aber dabei die weiche Komponente auf die harte Komponente aufgespritzt, was der Regelfall ist, ergeben sich nur wenige zerreißfeste Kombinationen, weil nur eine ungenügende Interdiffusion stattfinden kann, da wegen der Temperaturführung bei diesem Verfahren der Diffusionsprozeß nur sehr kurz ist. Nähere Angaben über die Haftung der genannten Komponenten werden in der Veröffentlichung nicht gemacht. Auch sind diesbezügliche Anwendungen nicht bekannt.

Schließlich ist ein Verfahren - und zwar eine Profilextrusion - und eine Vorrichtung zur Vorvulkanisation von thermoplastischen Kunststoffen und Elastomeren bekannt (DE-C 43 14 191), bei dem ein chemischer Verbund zwischen den Komponenten, gegebenenfalls unter Zusatz eines Kupplungsmaterials, hergestellt wird. Dieses Verfahren unterscheidet sich aufgrund der längeren Kontaktzeiten zwischen den Komponenten wesentlich von obengenanntem Mehrkomponentenspritzguß. Ebenso wie für die thermoplastischen Polymere sind auch für die einsetzbaren thermoplastischen Kunststoffe eine Vielzahl von Stoffen angeführt, u.a. auch TPE-U und POM. Spezielle Hinweise, gerade diese Stoffe gemeinsam einzusetzen sowie Vorteile einer solchen Kombination fehlen in der Veröffentlichung.

Aufgabe der vorliegenden Erfindung war es, einen Verbundkörper aus Polyacetal mit direkt angeformten Funktionselementen aus thermoplastischen Elastomeren nach dem Mehrkomponentenspritzguß zu schaffen, bei dem die genannten Nachteile und Einschränkungen nicht vorhanden sind.

Dieser Polyacetal-Elastomer-Verbundkörper, besteht aus
a) Polyacetal
b) mindestens einem thermoplastisch verarbeitbaren Elastomeren, vorzugsweise TPE-U.

Gegenstand der Erfindung ist ein Verfahren zur Herstellung des zuvor genannten Polyacetal-Elastomer-Verbundkörpers wie es im Anspruch 1 beschrieben ist, bei dem zunächst das Material mit der höheren Härte (Komponente a)) in das Werkzeug vorgespritzt wird. Die Massetemperatur liegt dabei im üblichen Bereich, d.h. für die unten beschriebenen Polyacetale im Bereich von etwa 180 bis 240°C, vorzugsweise 190 bis 230°C. Das Werkzeug selbst wird temperiert im Bereich von 20°C bis 140°C. Für die Formpräzision und Dimensionsstabilität des harten Bauteilkörpers aus dem teilkristallinen Werkstoff ist eine Werkzeugtemperatur im oberen Temperaturbereich vorteilhaft.

Sobald das Teil vollständig gefüllt ist und der Nachdruck nicht weiter wirksam ist (Siegelpunkt), kann die Komponente a) fertig ausgekühlt und dann als erster Teil des Verbundkörpers (Vorspritzling) entformt werden. In einem zweiten, nachgeschalteten separaten Spritzgießschritt wird dann z.B. dieser Vorspritzling in ein anderes Werkzeug mit einer ausgesparten Kavität eingelegt bzw. umgesetzt und das Material mit der geringeren Härte (Komponente b)) in das Werkzeug eingespritzt und dabei auf die Komponente a) aufgespritzt (Einlege- oder Umsetzverfahren). Dabei ist es für die nachfolgend erreichbare Haftung besonders vorteilhaft, wenn das vorgespritzte Bauteil aus der harten Komponente a) im Bereich von 80°C bis knapp unter den Schmelzpunkt vorgewärmt wird, um damit ein Anschmelzen durch die zweite Komponente b) und deren Eindringen in die Grenzschicht zu erleichtern.

Das vorgespritzte Bauteil aus Komponente a) kann auch nur teilentformt werden und zusammen mit einem Teil des ursprünglichen Werkzeugs (z.B. der Angussplatte, der Ausstoßerseite oder nur einer Indexplatte) in eine weitere größere Kavität bewegt werden.

Eine andere Möglichkeit besteht darin, die zweite, weichere Komponente b) ohne Zwischenöffnen der Maschine und Weitertransport des Vorspritzlings aus Komponente a) in das gleiche Werkzeug einzuspritzen. Die Werkzeughohlräume für die zweite, weichere Komponente b) sind beim Einspritzen der ersten, härteren Komponente a) zunächst durch verschiebbare Einsätze oder Kerne verschlossen und werden erst zum Einspritzen der zweiten Komponente b) geöffnet (Schiebertechnik). Diese Verfahrensvariante ist auch für die Haftung besonders vorteilhaft, da bereits nach kurzer Kühlzeit die Schmelze des weichen Werkstoffs auf einen noch heißen Vorspritzling trifft.

Gegebenenfalls können weitere Komponenten des Typs a) oder b) gleichzeitig mit dem Einspritzen der Komponente b) im zweiten Schritt oder in weiteren nachfolgenden Schritten aufgespritzt werden.
Beim Aufspritzen der Komponente b) ist es für eine gute Haftung vorteilhaft, die Einstellungen für die Massetemperatur, die Einspritzgeschwindigkeit sowie den Einspritz- und den Nachdruck möglichst hoch zu wählen. Im allgemeinen liegt die Massetemperatur der Komponente (b) im Bereich von 180 bis 240°C und wird nach oben durch ihre Zersetzung begrenzt.

Die maximalen Werte für die Einspritzgeschwindigkeit, dem Einspritz- und Nachdruck sind maschinen- und formteilabhängig und sind den jeweiligen Gegebenheiten anzupassen. Nach allen Verfahrensvarianten, mit oder ohne Entformung des Vorspritzlings wird das Werkzeug im zweiten Schritt temperiert, im Bereich von 20°C bis 100°C. Dabei zeigen die angeführten Beispiele, daß eine Werkzeugtemperatur im oberen Temperaturbereich zu einer besseren Haftung führt. Je nach Konstruktion der Teile kann es jedoch sinnvoll sein, die Werkzeugtemperatur etwas abzusenken, um somit die Entformbarkeit und die Cycluszeiten zu optimieren.

Nach dem Auskühlen der Teile wird der Mehrkomponenten-Spritzkörper entformt. Hierbei ist es bei der Werkzeugkonstruktion wichtig, die Auswerfer an geeigneter Stelle anzubringen, um eine Belastung der Werkstoff-Verbundnaht zu minimieren. Auch eine ausreichende Entlüftung der Kavität im Nahtbereich ist bei der Werkzeugkonstruktion vorzusehen, um eine Behinderung der Verbindung zwischen den beiden Komponenten durch eingeschlossene Luft möglichst gering zu halten. Einen ähnlichen Einfluß übt auch die Art der Werkzeugwandrauhigkeit aus. Für die Ausbildung einer guten Haftung ist eine glatte Oberfläche an der Stelle der Verbundnaht vorteilhaft, da hier weniger Luft in der Oberfläche eingeschlossen wird.

Die Verbundfestigkeit bei Zugbelastung zwischen der Komponente a) und der Komponente b), die durch das Verfahren gemäß der Erfindung erzielt wird, sollte mindestens 0,5 N/mm² betragen, um eine einwandfreie Handhabung zu gewährleisten. Für Funktionsteile ist eine höhere Haftung - je nach Beanspruchung - anzustreben.
Als (Komponente a), die bei dem Verbundkörper Verwendung findet, wird ein Polyacetal eingesetzt und zwar aus der Gruppe der bekannten Polyoxymethylene (POM), wie sie beispielsweise in der DE-A 29 47 490 beschrieben sind. Es handelt sich hierbei im allgemeinen um unverzweigte lineare Polymere, die in der Regel mindestens 80 Mol-%, vorzugsweise mindestens 90 Mol-%, Oxymethyleneinheiten (-CH₂O-) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind solche Polymere, deren Hydroxylendgruppen in bekannter Weise chemisch gegen Abbau stabilisiert sind, z.B. durch Veresterung oder Veretherung.

Copolymere sind Polymere aus Formaldehyd oder_seinen cyclischen Oligomeren, insbesondere Trioxan, und cyclischen Äthern, cyclischen Acetalen und/oder linearen Polyacetalen.

Als Comonomere kommen 1) cyclische Äther mit 3, 4 oder 5, vorzugsweise 3 Ringgliedern, 2) von Trioxan verschiedene cyclische Acetale mit 5 bis 11, vorzugsweise 5, 6, 7 oder 8 Ringgliedern und 3) lineare Polyacetale, jeweils in Mengen von 0,1 bis 20, vorzugsweise 0,5 bis 10 Mol-%, in Frage.

Die eingesetzten Polyacetal-Polymere haben im allgemeinen einen Schmelzindex (MFR-Wert 190/2,16) von 0,5 bis 75 g/10 min (ISO 1133).

Bevorzugt werden modifizierte POM-Typen eingesetzt, die zu einer verbesserten Haftung mit der weicheren Komponente b) führen. Zu diesen modifizierten Typen zählen beispielsweise Blends aus POM mit TPE-U (Thermoplastisches Polyurethan-Elastomer), mit MBS (Methylmethacrylat/Butadien/Styrolcore-shell-Elastomer), mit MethylmethacrylatlAcrylat-core-shefl-Elastomer, mit PC (Polycarbonat), mit SAN (Styrol/Acrylnitril-Copolymer) oder mit ASA (Acrylat/Styrol/Acrylnitril Copolymer-Compound).

Als vorteilhaft hat es sich erwiesen, daß die Komponente a) mit 1 bis 50 Gew.-% eines thermoplastischen Polyurethanelastomers, mit 1 bis 40 Gew.-%eines Methylmethacrylat/Butadien/Styrol-core-shell-Elastomers oder einer Mischung von beiden modifiziert ist, wobei die Summe beider Modifikatoranteile im Bereich von 1 bis 50 Gew.-% liegt.

Als thermoplastisch verarbeitbare Elastomere (Komponente b) werden TPE-U (Thermoplastische Polyurethan- Elastomere) eingesetzt. Bei diesen Materialien handelt es sich um Multiblockcopolymere, die aus steifen Urethansegmenten und flexiblen langkettigen Diolsegmenten aufgebaut sind.

Die steifen Urethansegmente werden dabei aus einer.Reaktion zwischen Diisocyanaten und den sogenannten Kettenverlängerern erhalten. Als Diisocyanat können aromatische, alicyclische oder aliphatische Diisocyanate zum Einsatz kommen. Bevorzugt werden dabei Diphenylmethan-4,4'-diisocyanat (MDI), Tolylen-diisocyanat (TDI), m-Xylylen-diisocyanat, p-Xylylen-diisocyanat, Naphthylendiisocyanat, Diphenyldiisocyanat, 4,4'-Methylene-biscyclohexylisocyanat, Isophorondiisocyanat und 1,6-Hexamethylendiisocyanat. Als Kettenverlängerer werden kurzkettige aliphatische, alicyclische oder aromatische Diole oder Diamine mit einer Molmasse unter 500 g/mol, vorzugsweise unter 300 g/mol eingesetzt, vorzugsweise z.B. Ethylenglykol, 1,3-Propylenglykol, 1,2-Propylenglykol, 1,4-Butandiol, 1,5-Pentandiol, 1,6-Hexandiol, 1,4-Cyclohexandiol, Ethylendiamin, Hexamethylendiamin, Xylylendiamin oder 4,4'-Diaminodiphenylmethan.

Die flexiblen langkettigen Diolsegmente können ausgewählt werden aus Polyetherdiolen, Polyesterdiolen, Polyetheresterdiolen und Polycarbonatdiolen mit einer zahlenmäßig mittleren Molmasse im Bereich von 500 bis 5000 g/mol, vorzugsweise 1000 bis 3000 g/mol. Die Polyetherdiole können durch ringöffnende Polymerisation von cyclischen C₂ bis C₁₂-Ethern, wie Ethylenoxid, Propylenoxid oder Tetrahydrofuran, erhalten werden. Die Polyesterdiole können durch Veresterungsreaktionen von Dialkoholen (bevorzugt werden dabei z.B. Ethylenglykol, 1,3-Propylenglykol, 1,2-Propylenglykol, 1,4-Butandiol, 1,3-Butandiol, 2-methylpropandiol, 1,5-Pentandiol, 3-methyl-1,5-Pentandiol, 1,6-Hexandiol, Neopentylglykol, Nonandiol, 1,10-Decandiol) und Dicarbonsäuren (bevorzugt werden dabei z.B. Glutarsäure, Adipinsäure, Pimelinsäure, Korksäure, Sebacinsäure, Terephthalsäure oder Isophthalsäure) oder durch entsprechende Umesterungsreaktionen erhalten werden. Ebenso ist es möglich, solche Polyesterdiole durch ringöffnende Polymerisation von Lactonen (bevorzugt werden dabei z.B. Caprolacton, Propiolacton und Valerolacton) zu erhalten. Die Polycarbonate können durch die Reaktion von Dialkoholen (bevorzugt werden dabei z.B. Ethylenglykol, 1,3-Propylenglykol, 1,2-Propylenglykol, 1,4-Butandiol, 1,3-Butandiol, 2-methylpropandiol, 1,5-Pentandiol, 3-methyl-1,5-Pentandiol, 1,6-Hexandiol, Neopentylglykol, Nonandiol, 1,10-Decandiol) mit Diphenylcarbonat oder Phosgen erhalten werden.

Für die hier beschriebenen Verbundkörper können sowohl Polyesterurethan- wie auch Polyetherurethan-Elastomere zum Einsatz kommen. Die Produkte liegen im Härte-Bereich von etwa Shore A 65 bis etwa Shore D 75. Die Härte ist dabei auch ein Maß für den Anteil der steifen Urethansegmente zu den flexiblen langkettigen Diolsegmenten. Der Schmelzindex der Produkte wird abhängig vom Aufschmelzverhalten der steifen Urethansegmente bei verschiedenen Temperaturen gemessen. Er ist auch ein Maß für den Additionsgrad (Molmasse der Gesamtketten).

In den Komponenten a) und b) können übliche Zusatzstoffe enthalten sein, wie Stabilisatoren, Nukleierungsmittel, Entformungsmittel, Gleitmittel, Füll- und Verstärkungsstoffe, Pigmente, Ruß, Licht- und Flammschutzmittel, Antistatika, Weichmacher oder optische Aufheller. Die Zusatzstoffe liegen in üblichen Mengen vor.
Als Funktionselemente sollen im Rahmen der vorliegenden Erfindung z.B. Dichtund/oder Dämpfungselemente verstanden werden oder aber auch Bereiche zur Verbesserung der Rutschfestigkeit wie Griffmulden und ähnliches.

Der Ausdruck "direkt angeformt" soll im Rahmen der vorliegenden Erfindung so verstanden werden, daß die Funktionselemente direkt auf die Formteile aus Polyacetal, mit dem sie einen haftfesten Verbund eingehen sollen, aufgespritzt werden, insbesondere in einem Mehrkomponentenspritzgußverfahren.

Durch den Einsatz der oben angegebenen Elastomeren können die Dicht- oder Dämpfungselemente direkt an Formteile aus thermoplastischen Polymeren angeformt werden, ohne daß weitere Montageschritte erforderlich werden. Durch den Wegfall der bisher benötigten Verarbeitungsschritte zur Montage von Funktionselementen ist eine erhebliche Kosteneinsparung bei der Produktion der erfindungsgemäßen Verbundkörper zu erzielen.

Verwendung finden die Verbundkörper gemäß der Erfindung als Verbindungselemente in Form von Fittings, Kupplungen, Rollen, Lager, als Funktionsteile mit integrierten Dicht- und/oder Dämpfungseigenschaften sowie als rutschfeste und grifffreundliche Elemente. Hierzu zählen Gehäuse im Automobilbau wie Türschlossgehäuse, Fensterhebergehäuse, Schiebedachdichtelemente und ähnliche, ferner Befestigungselemente mit integrierter Abdichtung wie Clipse mit Dichtringen oder -scheiben, Zierleisten mit integrierter Dichtlippe, Abdichtungselemente zum Ausgleich von Dehnungsfugen, Befestigungselemente mit guten Dämpfungseigenschaften, z.B. Clipse mit schwingungs- und geräuschdämpfenden Kernen, Getriebeteile wie Zahnräder mit Dämpfungselementen, Zahnradgetriebe mit integrierten flexiblen Kupplungen, rutschfeste und grifffreundliche Elemente wie Schalthebel oder -knöpfe oder Griffflächen an Elektrogeräten oder Schreibstiften sowie Kettenglieder mit elastischer Oberfläche.

Da ein Meßverfahren für die Haftfestigkeit zwischen der harten Polyacetal-Komponente und der weichen, thermoplastisch verarbeitbaren ElastomerKomponente des Verbundkörpers gemäß der Erfindung nicht bestand, wurden geeignete Meßverfahren unter Technikumsverhältnissen entwickelt. Diese Verfahren sollen Hinweise auf mögliche, unter Praxisbedingungen erzielbare Ergebnisse liefern.

### Meß-Verfahren I

Für die Spritzgießversuche wurde eine Spritzgussmaschine mit einer Schließkraft von 900 kN und einem Schneckendurchmesser von 30 mm eingesetzt (Typ KM 90-210 B, Hersteller Krauss-Maffei, München, BRD). Es wurden zunächst ISO-Zugstäbe mit den Abmessungen nach ISO 3167 aus Material 1 vorgespritzt. Bei den verwendeten Polyacetaltypen betrug die Massetemperatur 200°C und die Werkzeugtemperatur 80°C. (Bei der Verwendung der TPE-U-Typen als Material 1 für die Beispiele mit umgekehrter Spritzgießreihenfolge in Tabelle 5 b) betrug die Massetemperatur 200°C und die Werkzeugtemperatur 30°C.) Die erhaltenen ISO-Zugstäbe wurden in der Mitte zersägt, so daß zwei halbe Stäbe mit je einer Schulter entstanden.

Die so gewonnenen halben Zugstäbe aus Polyacetal wurden in einem Umluftofen bei verschiedenen Temperaturen T_{einleg} (50 bis 140°C) vorgewärmt und innerhalb von etwa 20 sec warm in die vollständig offene Zugstabform eingelegt. (Die halben Stäbe aus TPE-U für die Beispiele mit umgekehrter Spritzgießreihenfolge in Tabelle 5 b) wurden nicht vorgewärmt, sondern bei Raumtemperatur in das Werkzeug eingelegt.) In einem zweiten Spritzgießvorgang wurde Material 2 bei verschiedenen Massetemperaturen Tₘ (200 bis 220 °C) und Werkzeugtemperaturen T_{w} (30 bis 80°C) mit einer Einspritzgeschwindigkeit vₑ von 300 bis 400 mm/sec in die Zugstabform gespritzt. Der Nachdruck pₐ wurde variiert (60 bis 120 bar) bei einer Nachdruckzeit von 30 sec.

### Meß-Verfahren II

Für die Spritzgießversuche wurde eine Dreikomponenten-Spritzgussmaschine mit einer Schließkraft von 2000 kN verwendet (Typ FM 175/200, Hersteller Klöckner-Ferromatik, Malterdingen, BRD). Von den vorhandenen drei Schnecken wurde ein Aggregat mit einem Durchmesser von 45 mm eingesetzt. In einer halbseitig verschlossenen Kavität wurden zunächst abgewandelte ISO-Zugstäbe mit einer Schulter aus Material 1 vorgespritzt. Bei den verwendeten Polyacetaltypen betrug die Massetemperatur 200°C und die Werkzeugtemperatur 80°C.

Die so gewonnenen halben Zugstäbe aus Polyacetal wurden in einem Umluftofen bei einer Temperatur T_{einleg} von 155°C vorgewärmt und innerhalb von etwa 20 sec warm in die vollständig offene Zugstabform eingelegt. In einem zweiten Spritzgießvorgang wurde Material 2 bei verschiedenen Massetemperaturen Tm (200 bis 225 °C) und Werkzeugtemperaturen Tw (30 bis 80°C) mit einer Einspritzgeschwindigkeit von 600 mm/sec in die Zugstabform gespritzt. Der Nachdruck betrug 80 bar bei einer Nachdruckzeit von 30 sec.

### Meß-Verfahren III

Für die Spritzgießversuche wurde eine Dreikomponenten-Spritzgussmaschine mit einer Schließkraft von 2000 kN verwendet (Typ FM 175/200, Hersteller Klöckner-Ferromatik, Malterdingen, BRD). Von den vorhandenen drei Schnecken wurde ein Aggregat mit einem Durchmesser von 45 mm für die Komponente a (Polyacetal) und eines mit einem Durchmesser von 30 mm für die Komponente b (TPE-U) eingesetzt. Die beiden Schmelzeströme wurden gleichzeitig von zwei Seiten in ein Werkzeug für den ISO-Zugstab direkt aufeinander gespritzt, so daß sie in der Mitte des Zugstabes frontal aufeinandertrafen. Dabei wurden die Einstellungen im Polyacetalaggregat konstant gehalten (Massetemperatur 200°C, Einspritzgeschwindigkeit 600 mm/sec und Nachdruck 80 bar über 30 sec). Die Komponente b (TPE-U) wurde bei verschiedenen Massetemperaturen Tm (200 bis 220 °C) mit einer Einspritzgeschwindigkeit von 225 mm/sec und einem Nachdruck pₐ von 50 bis 80 bar bei einer Nachdruckzeit von 30 sec eingespritzt. Die Werkzeugtemperatur T_{w} lag bei 30 bis 55°C.

Bei ausreichender Haftung entstand nach den drei beschriebenen Verfahren ein vollständiger Zugstab mit einer Verbundnaht zwischen den beiden Schulterhälften aus den beiden Materialien. Diese Prüfstäbe wurden auf einer Zugprüfmaschine Typ 1455 (Fa. Zwick, Ulm, BRD) im Zugversuch (ISO 527) mit einer Zuggeschwindigkeit von 50 mm/sec geprüft. Für jedes Beispiel wurden 10 Verbund-Zugstäbe gespritzt und geprüft. Aus dem Ergebnis des Zugversuches (Spannung bei Dehnung) wurde die Zugfestigkeit bis zum Bruch der Stäbe an der Verbundnaht (Verbundfestigkeit) bestimmt. Die für die 10 Prüfkörper erhaltenen Werte wurden gemittelt und die dazugehörige Standardabweichung berechnet. Die Ergebnisse sind in den Tabellen aufgeführt.

### Beispiele

### Komponente a) (Polyacetal)

### A1 : ( POM MFI 9)

Polyoxymethylencopolymerisat aus Trioxan und ca. 2 Gew. % Ethylenoxid, Schmelzindex MFR 190/2,16 (ISO 1133) : 9 g/10 min,
Modifizierung : Keine

### A2: ( POM MFI 27)

Polyoxymethylencopolymerisat aus Trioxan und ca. 2 Gew. % Ethylenoxid, Schmelzindex MFR 190/2.16 (ISO 1133): 27 g/10 min,
Modifizierung : Keine

### A3: (POM MFI 9 + 10 % TPE-U)

Polyoxymethylencopolymerisat aus Trioxan und ca. 2 Gew. % Ethylenoxid, Schmelzindex MFR 190/2,16 (ISO 1133) : 9 g/10 min,
Modifizierung : 10 Gew. % TPE-U der Zusammensetzung wie B3

### A4 : ( POM MFI 9 + 20 % TPE-U)

Polyoxymethylencopolymerisat aus Trioxan und ca. 2 Gew. % Ethylenoxid, Schmelzindex MFR 190/2,16 (ISO 1133): 9 g/10 min,
Modifizierung : 20 Gew. % TPE-U der Zusammensetzung wie B3

### A5 : ( POM MFI 27 + 5 % TPE-U)

Polyoxymethylencopolymerisat aus Trioxan und ca. 2 Gew. % Ethylenoxid, Schmelzindex MFR 190/2,16 (ISO 1133) : 27 g/10 min,
Modifizierung : 5 Gew. % TPE-U der Zusammensetzung wie B3

### A6: ( POM MFI 27 + 10 % TPE-U)

Polyoxymethylencopolymerisat aus Trioxan und ca. 2 Gew. % Ethylenoxid, Schmelzindex MFR 190/2,16 (ISO 1133): 27 g/10 min,
Modifizierung : 10 Gew. % TPE-U der Zusammensetzung wie B3

### A7 : ( POM MFl 27 + 20 % TPE-U)

Polyoxymethylencopolymerisat aus Trioxan und ca. 2 Gew. % Ethylenoxid, Schmelzindex MFR 190/2,16 (ISO 1133) : 27 g/10 min,
Modifizierung : 20 Gew. % TPE-U der Zusammensetzung wie B3

### A8 : ( POM MFI 27 + 30 % TPE-U)

Polyoxymethylencopolymerisat aus Trioxan und ca. 2 Gew. % Ethylenoxid, Schmelzindex MFR 190/2,16 (ISO 1133) : 27 g/10 min,
Modifizierung : 30 Gew. % TPE-U der Zusammensetzung wie B3

### A9 : ( POM MFI 27 + 40 % TPE-U)

Polyoxymethylencopolymerisat aus Trioxan und ca. 2 Gew. % Ethylenoxid, Schmelzindex MFR 190/2,16 (ISO 1133) : 27 g/10 min,
Modifizierung : 40 Gew. % TPE-U der Zusammensetzung wie B3

### A10 : (POM MFI 27 + 10 % aliphat.TPE-U)

Polyoxymethylencopolymerisat aus Trioxan und ca. 2 Gew. % Ethylenoxid, Schmelzindex MFR 190/2,16 (ISO 1133) : 27 g/10 min,
Modifizierung: 10 Gew. % aliphat. Polyester-TPE-U aus Hexamethylendiisocyanat, Adipinsäure, Ethylenglykol, 1,4-Butandiol, Neopentylglykol und 1,6-Hexandiol, Shore-Härte A 72, Dichte 1,14 g/cm³;

### A11 : (POM MFI 9 + 13 % MBS)

Polyoxymethylencopolymerisat aus Trioxan und ca. 2 Gew. % Ethylenoxid, Schmelzindex MFR 190/2,16 (ISO 1133) : 9 g/10 min,
Modifizierung: 13 Gew. % MBS core shell-Modifikator aus ca. 80 Gew.% elastischem Polybutadien-Kern und 20 Gew.% MMA /Styrol-Schale mit einer Partikelgröße von etwa 100 nm;

### A12: (POM MFI 9 + 25 % MBS)

Polyoxymethylencopolymerisat aus Trioxan und ca. 2 Gew. % Ethylenoxid, Schmelzindex MFR 190/2,16 (ISO 1133) : 9 g/10 min,
Modifizierung: 25 Gew. % MBS core shell-Modifikator aus ca. 80 Gew.% elastischem Polybutadien-Kern und 20 Gew.% MMA /Styrol-Schale mit einer Partikelgröße von etwa 100 nm

### A13 : (POM MFI 13, geringerer Comonomergehalt)

Polyoxymethylencopolymerisat aus Trioxan und ca. 0,7 Gew. % Ethylenoxid, Schmelzindex MFR 190/2,16 (ISO 1133): 13 g/10 min,
Modifizierung : Keine

### A14 : (®Delrin 8511, DuPont, Genf, Schweiz)

Polyoxymethylenhomopolymerisat aus Formaldehyd
Schmelzindex MFR 190/2,16 (ISO 1133): 14 g/10 min,
handelsübliche Stabilisierung und Entformungsmittel

### A15 : (®Ultraform N 2320, BASF AG, Ludwigshafen, Bundesrepublik Deutschland)

Polyoxymethylencopolymerisat aus Trioxan und ca. 2,7 Gew. % Butandiolformal, Schmelzindex MFR 190/2,16 (ISO 1133): 9 g/10 min,
handelsübliche Stabilisierung und Entformungsmittel

### A16 : (POM MFI 27 + 10 % aliphat. TPE-U + 10 % Glasfaser)

Polyoxymethylencopolymerisat aus Trioxan und ca. 2 Gew. % Ethylenoxid, Schmelzindex MFR 190/2,16 (ISO 1133) : 27 g/10 min,
Modifizierung: 10 Gew. % aliphat. Polyester-TPE-U aus Hexamethylendiisocyanat, Adipinsäure, Ethylenglykol, 1,4-Butandiol, Neopentylglykol und 1,6-Hexandiol, Shore-Härte A 72, Dichte 1,14 g/cm³; 10 Gew. % Kurzglasfaser EMF 1691 Komponente b) (Thermoplastisches Polyurethanelastomer, TPE-U)

Alle TPE-U - Produkte wurden vor der Verarbeitung für 6 Stunden bei 80°C unter Umluft vorgetrocknet, da die Verarbeitbarkeit der TPE-U und die Haftung durch Feuchtigkeit verschlechtert wird.

### B1 :

teilaromatisches Polyester-TPE-U aus Diphenylmethan-4,4'-diisocyanat (MDI), 1,4-Butandiol als Kettenverlängerer, Polyesterdiol aus Adipinsäure und 1,4-Butandiol,
Shore-Härte A 83, Dichte 1,20 g/cm³; MVR 210/2,16 (ISO 1133) : 6 cm/10 min Entformungshilfsmittel : ohne

### B2:

teilaromatisches Polyester-TPE-U aus Diphenylmethan-4,4'-diisocyanat (MDI), 1,4-Butandiol als Kettenverlängerer, Polymischesterdiol aus Adipinsäure, Ethylenglykol und 1,4-Butandiol,
Shore-Härte A 80, Dichte 1,22 g/cm³; MVR 210/2,16 (ISO 1133) : 7 cm/10 min, MVR 230/2,16 (ISO 1133): 109cm²/10 min
Entformungshilfsmittel : ohne

### B3:

teilaromatisches Polyester-TPE-U aus Diphenylmethan-4,4'-diisocyanat (MDI), 1,4-Butandiol als Kettenverlängerer, Polymischesterdiol aus Adipinsäure, Ethylenglykol und 1,4-Butandiol,
Shore-Härte A 80, Dichte 1,22 g/cm³; MVR 210/2,16 (ISO 1133) : 7 cm/10 min Entformungshilfsmittel : 0,5 Gew. % Ethylenbisstearamid

### B4 :

teilaromatisches Polyester-TPE-U aus Diphenylmethan-4,4'-diisocyanat (MDI), 1,4-Butandiol als Kettenverlängerer, Polymischesterdiol aus Adipinsäure, Ethylenglykol und 1,4-Butandiol,
Shore-Härte A 84, Dichte 1,22 g/cm³; MVR 210/2,16 (ISO 1133): 14 cm/10 min Entformungshilfsmittel : ohne

### B5 :

teilaromatisches Polyester-TPE-U aus Diphenylmethan-4,4'-diisocyanat (MDI), 1,4-Butandiol als Kettenverlängerer, Polymischesterdiol aus Adipinsäure, 1,6-Hexandiol und 1,4-Butandiol,
Shore-Härte A 80, Dichte 1,18 g/cm³; MVR 210/2,16 (ISO 1133) : 7 cm/10 min Entformungshilfsmittel : ohne

### B6 :

teilaromatisches Polyether-TPE-U aus Diphenylmethan-4,4'-diisocyanat (MDI), 1,4-Butandiol als Kettenverlängerer, Polyetherdiol aus Polytetrahydrofuran,
Shore-Härte A 80, Dichte 1,22 g/cm³; MVR 210/2,16 (ISO 1133): 13 cm/10 min Entformungshilfsmittel : ohne

### B7:

teilaromatisches Polyester-TPE-U aus Diphenylmethan-4,4'-diisocyanat (MDI), 1,4-Butandiol als Kettenverlängerer, Polymischesterdiol aus Adipinsäure, Ethylenglykol und 1,4-Butandiol,
Shore-Härte A 92, D 41, Dichte 1,23 g/cm³; MVR 230/2,16 (ISO 1133): 90 cm/10 min
Entformungshilfsmittel : ohne

### B8:

teilaromatisches Polyester-TPE-U aus Diphenylmethan-4,4'-diisocyanat (MDI),
1 ,4-Butandiol als Kettenverlängerer, Polymischesterdiol aus Adipinsäure, Ethylenglykol und 1,4-Butandiol,
Shore-Härte A 98, D 53, Dichte 1,25 g/cm³; MVR 230/2,16 (ISO 1133) : 97 cm/10 min
Entformungshilfsmittel : ohne

### B9:

teilaromatisches Polyester-TPE-U aus Diphenylmethan-4,4'-diisocyanat (MDI), 1,4-Butandiol als Kettenverlängerer, Polymischesterdiol aus Adipinsäure, Ethylenglykol und 1,4-Butandiol,
Shore-Härte D 64, Dichte 1,26 g/cm³; MVR 230/2,16 (ISO 1133) : 83 cm/10 min Entformungshilfsmittel : ohne

### Tabellen

Tabelle 1 zeigt den Einfluß der Einlegetemperatur im Bereich 50 bis 140 °C. Bei höherer Einlegetemperatur steigt die Verbundfestigkeit signifikant an.

Tabelle 2 zeigt den Einfluß der Werkzeugtemperatur im Bereich 30 bis 80 °C. Bei höherer Werkzeugtemperatur steigt die Verbundfestigkeit signifikant an.

Tabelle 3 zeigt den Einfluß des Nachdruckes im Bereich 80 bis 120 bar. Bei höherem Nachdruck steigt die Verbundfestigkeit leicht an.

Tabelle 4 zeigt den Einfluß der Einspritzgeschwindigkeit im Bereich 300 bis 400 mm/sec. Im untersuchten Bereich hat die Einspritzgeschwindigkeit wenig Einfluß auf die Verbundfestigkeit.

Tabelle 5 a und 5 b zeigen den Einfluß der Spritzgießreihenfolge bei gleichen Materialkombinationen. Bei den Beispielen in Tabelle 5 a) wurde die harte Komponente a) vorgespritzt und die weiche Komponente b) im zweiten Schritt auf die harte Komponente aufgespritzt. In Tabelle 5 b) dagegen wurde die weiche Komponente b) vorgespritzt und die harte Komponente a) auf die weiche Komponente aufgespritzt. Bei allen Kombinationen liegen die Verbundfestigkeiten deutlich höher, wenn die harte Komponente auf die weiche Komponente aufgespritzt wird. Dieses Verfahren ist jedoch wegen der fehlenden Dimensionsstabilität der weichen Komponente und der oft geringen Formteilabmessungen von weichen Dichtungen in der Praxis meist nicht anwendbar.

Tabelle 6 a und 6 b zeigen den Einfluß der Modifizierung des Polyacetales durch Beimischung unterschiedlicher Anteile an TPE-U . In allen untersuchten Beispielen nimmt die Verbundfestigkeit mit steigendem Gehalt an TPE-U signifikant zu.

Tabelle 7 zeigt den Einfluß der Modifizierung des Polyacetales durch Beimischung unterschiedlicher Anteile an MBS-core shell-Kautschuk. In den untersuchten Beispielen nimmt die Verbundfestigkeit mit steigendem Gehalt an MBS signifikant zu.

Tabelle 8 zeigt den Einfluß des Comonomer-Gehaltes und des Comonomer-Types im Polyacetal. Mit steigendem Comonomer-Gehalt nimmt die Verbundfestigkeit signifikant zu.

Tabelle 9 zeigt den Einfluß geringer Mengen von Entformungshilfsmittel im TPE-U (B3 gegen B2). In diesen Beispielen ist keine negative Auswirkung erkennbar. Dies ist in der Praxis wichtig, da ein Zusatz von Entformungshilfsmittel die Verarbeitbarkeit des TPE-U verbessern kann. Auch die Viskosität des TPE-U - Types (B4 gegen B2) hat in diesen Beispielen keine Auswirkung gezeigt. Dies ist in der Praxis wichtig, um zu reproduzierbaren Verbundfestigkeiten auch bei schwankender Fließfähigkeit des TPE-U zu gelangen.

Tabelle 10 vergleicht TPE-U - Typen ähnlicher Härte, jedoch unterschiedlichem chemischen Aufbau der flexiblen Segmente. Die beste Haftung in diesen Beispielen erzielt man mit einem Aufbau gemäß B1 (reines Butandioladipat-Weichsegment). Jedoch kann auch mit anderen Polyester- oder auch Polyether-Typen (B6) eine gute Haftung erzielt werden. Dies ist in der Praxis oft wichtig, da z.B. durch Mischester die Kristallisation der Weichsegmente unterdrückt werden kann und damit eine bessere Kälteflexibilität gewährleistet ist, oder z.B. Polyether eine bessere Hydrolysebeständigkeit aufweisen.

Tabelle 11 vergleicht TPE-U -Typen mit ähnlichem chemischen Aufbau, jedoch unterschiedlicher Härte. Mit zunehmender Härte der weichen Komponente nimmt die Verbundfestigkeit zu. Für die Praxis ist es jedoch oft erforderlich, eine weiche Komponente mit einer möglichst geringen Härte einzusetzen, um so die optimale Dichtungs- und Dämpfungsfunktion zu gewährleisten.

Tabelle 12 zeigt den Einfluß des Prüfverfahrens auf die Ergebnisse für die Verbundfestigkeit. Beim Einlegeverfahren (Verfahren 1) liegen die erzielten Festigkeiten deutlich unter denen beim direkten Aufeinandertreffen der Schmelzen (Verfahren III). Bei der in der Praxis besonders geeigneten Schiebertechnik liegen die Temperatur- und Zeit-Bedingungen im Bereich zwischen diesen beiden eingesetzten Prüfverfahren.

**Tabelle 1**

| Einfluß der Einlegetemperatur T_{einleg} (Herstellung der Prüfstäbe nach Verfahren I) | | | | | |
|---|---|---|---|---|---|
| | **Material 2** | **B 1** | **B 1** | **B 1** | **B 1** |
| | Tₘ [°C] | 200 | 200 | 200 | 200 |
| | T_{w} [°C] | 30 | 30 | 30 | 30 |
| | T_{einleg} [°C] | 50 | 80 | 110 | 140 |
| | pₐ [bar] | 80 | 80 | 80 | 80 |
| | vₑ [mm/sec] | 400 | 400 | 400 | 400 |

| **Material 1** | | | | | |
|---|---|---|---|---|---|
| **A 4** | Verbundtestigkeit [N/mm²] ± Std.Abw. | keine Haltung | keine Haltung | 1,3 ± 0.5 | 2,4 ± 0.9 |
| **A 10** | Verbundtestigkeit [N/mm²] ± Std. Abw. | keine Haftung | Keine Haftung | 1.0 ± 0.5 | 1.8 ± 0.8 |

**Tabelle 2**

| Einfluß der Werkzeugtemperatur T_{w} (Herstellung der Prüfstäbe nach Verfahren 1) | | | | |
|---|---|---|---|---|
| | **Material 2** | **B 1** | **B1** | **B 1** |
| | Tₘ [°C] | 200 | 200 | 200 |
| | T_{w} [°C] | 30 | 50 | 80 |
| | T_{einleg} [°C] | 140 | 140 | 140 |
| | pₐ [bar] | 80 | 80 | 80 |
| | vₑ [mm/sec] | 400 | 400 | 400 |

| **Material 1** | | | | |
|---|---|---|---|---|
| **A 2** | Verbundfestigkeit [N/mm²] ± Std. Abw. | Keine Haftung | 1,8 ± 1,0 | 3,2 ± 0,9 |
| **A 6** | Verbundfestigkeit [N/mm²] ± Std.Abw | 2,3 ± 0,5 | 2,8 ± 0.7 | 3,6 ± 0,4 |
| **A3** | Verbundtestigkeit [N/mm2] ± Std. Abw. | 1,1 ± 0.4 | 2,8 ± 0.9 | 3,5 ± 0,7 |

**Tabelle 3**

| Einfluß des Nachdruckes pₐ (Herstellung der Prüfstäbe nach Verfahren 1) | | | |
|---|---|---|---|
| | **Material 2** | **B1** | **B 1** |
| | Tₘ [°C] | 220 | 220 |
| | T_{w} [°C] | 30 | 30 |
| | T_{einleg} [°C] | 140 | 140 |
| | Pₐ [bar] | 80 | 120 |
| | vₑ [mm/sec] | 400 | 400 |

| **Material 1** | | | |
|---|---|---|---|
| **A 2** | Verbundfestigkeit [N/mm²] ± Std. Abw. | keine Haftung | 1,3 ± 0,6 |
| **A 6** | Verbundfestigkeit [N/mm²] ± Std. Abw. | 2,3 ± 0,5 | 2,6 ± 0,3 |
| **A 7** | Verbundfestigkeit [N/mm²] ± Std. Abw. | 2,6 ± 0,5 | 2,8 ± 0,5 |
| **A 3** | Verbundfestigkeit [N/mm²] ± Std. Abw. | 1,5 ± 0,5 | 1,6 ± 0,4 |
| **A 4** | Verbundfestigkeit [N/mm²] ± Std. Abw. | 2,2 ± 0,4 | 2,4 ± 0,5 |
| **A 12** | Verbundfestigkeit [N/mm²] ± Std. Abw. | 1,3 ± 0,4 | 1,6 ± 0,6 |

**Tabelle 4**

| Einfluß der Einspritzgeschwindigkeit Vₑ (Herstellung der Prüfstäbe nach Verfahren I) | | | |
|---|---|---|---|
| | **Material 2** | **B 1** | **B 1** |
| | Tₘ [°C] | 200 | 200 |
| | T_{w} [°C] | 30 | 30 |
| | T_{einleg} [°C] | 140 | 140 |
| | pₐ [bar] | 80 | 80 |
| | vₑ [mm/sec] | 300 | 400 |

| **Material 1** | | | |
|---|---|---|---|
| **A 2** | Verbundfestigkeit [N/mm²] ± Std. Abw. | keine Haftung | keine Haftung |
| **A 6** | Verbundfesfigkeit [N/mm²] ± Std. Abw. | 2,1 ± 1,0 | 2,3 ± 0,5 |
| **A 7** | Verbundfestigkeit [N/mm²] ± Std. Abw. | 2,1 ± 1,1 | 2,3 ± 0,7 |
| **A 3** | Verbundfestigkeit [N/mm²] ± Std. Abw. | 1,2 ± 0,7 | 1,1 ± 0,4 |
| **A 4** | Verbundfestigkeit [N/mm²] ± Std. Abw. | 2,6 ± 0,5 | 2,4 ± 0,9 |
| **A 12** | Verbundfestigkeit [N/mm²] ± Std. Abw. | 1,7 ± 0,7 | 2,1 ± 0,6 |

**Tabelle 5a**

| Einfluß der Spritzgießreihenfolge (Materialsequenz) a) Weich auf Hart (Herstellung der Prüfstäbe nach Verfahren I) | | | | |
|---|---|---|---|---|
| | Material 2 | B4 | B1 | B3 |
| | Tₘ [°C] | 200 | 200 | 200 |
| | T_{w} [°C] | 30 | 30 | 30 |
| | T_{einleg} [°C] | 140 | 140 | 140 |
| | pₐ [bar] | 80 | 80 | 80 |
| | vₑ [mm/sec] | 400 | 400 | 400 |

| **Material 1** | | | | |
|---|---|---|---|---|
| **A 1** | Verdungtestigken [N/mm²] ± Std. Abw | 0,9 ± 0.2 | keine hartung | keine hartung |
| **A 3** | Verbungtestigkeit [N/mm²] ± Std. Abw. | 1,3 ± 0.4 | 1,1 ± 0.4 | 2.0 ± 0.6 |
| **A 4** | Verbundtestigkeit [N/mm²] ±Std.Abw | 2.0 ±0,4 | 2,4 ±0,9 | 2,4 ±0,9 |
| **A 11** | Verbundtestigkert [N/mm²] ±Std.Abw. | 1,6 ±0.3 | 1,4 ± 0.7 | 1,1 ±0.6 |
| **A 12** | Verbundtestigkeit [N/mm²] ± Std. Abw. | 2,0 ± 0,4 | 2.1 ± 0.6 | 1,7 ± 0.9 |

**Tabelle 5b**

| Einfluß der Spritzgießreihenfolge (Materialsequenz) b) Hart auf Weich (Herstellung der Prüfstäbe nach Verfahren I) | | | | | | |
|---|---|---|---|---|---|---|
| | **Material 2** | **A1** | **A3** | **A4** | **A11** | **A12** |
| | Tₘ [°C] | 200 | 200 | 200 | 200 | 200 |
| | T_{w} [°C] | 80 | 80 | 80 | 80 | 80 |
| | T_{einleg} [°C] | 23 | 23 | 23 | 23 | 23 |
| | p₂ [bar] | 80 | 80 | 80 | 80 | 80 |
| | vₑ [mm/sec] | 400 | 400 | 400 | 400 | 400 |

| **Material 1** | | | | | | |
|---|---|---|---|---|---|---|
| **B 4** | Verbundtestigkeit [N/mm²] ± Std. Abw. | 1,6 ±0.5 | 1,9 ±0.6 | 1,8 ±0.4 | 2,3 ±0.5 | 2,7 ±0.5 |
| **B 1** | Verbundtestigkeit [N/mm²] ± Std. Abw. | 3.9 ± 0.4 | 4,4 ± 0.9 | 4,0 ± 0.6 | 4,0 ± 1.0 | 4,2 ± 0.5 |
| **B 3** | Verbundtestigkeit [N/mm²] ± Std. Abw. | 2,1 ±0,4 | 2,1 ± 0,6 | 1,9 ±0,6 | 2,1 ±0,7 | 2,4 ±0,4 |

**Tabelle 6a**

| Einfluß des TPE-U - Gehaltes im POM (Herstellung der Prüfstäbe nach Verfahren 1) | | |
|---|---|---|
| | **Material 2** | **B 4** |
| | Tₘ [°C] | 200 |
| | T_{w} [°C] | 30 |
| | T_{einleg} [°C] | 140 |
| | pₐ [bar] | 80 |
| | Vₑ [mm/sec] | 400 |

| **Material 1** | | |
|---|---|---|
| **A 1** | Verbundfestigkeit [N/mm²] ± Std. Abw. | 0,9 ± 0,2 |
| **A 3** | Verbundfestigkeit [N/mm²] ± Std. Abw. | 1,3 ± 0,4 |
| **A 4** | Verbundfestigkeit [N/mm²] ± Std. Abw. | 2,0 ± 0,4 |
| **A 2** | Verbundfestigkeit [N/mm²] ± Std. Abw. | 0,7 ± 0,4 |
| **A 6** | Verbundfestigkeit [N/mm²] ± Std. Abw. | 1,3 ± 0,4 |
| **A 7** | Verbundfestigkeit [N/mm²] ± Std. Abw. | 2,1 ± 0,3 |

**Tabelle 6b**

| Einfluß des TPE-U - Gehaltes im POM (Herstellung der Prüfstäbe nach Verfahren II) | | | |
|---|---|---|---|
| | **Material 2** | **B 2** | **B 1** |
| | Tₘ [°C] | 200 | 200 |
| | T_{w} [°C] | 55 | 80 |
| | T_{einleg} [°C] | 155 | 155 |
| | pₐ [bar] | 80 | 80 |
| | vₑ [mm/sec] | 600 | 600 |

| **Material 1** | | | |
|---|---|---|---|
| **A 2** | Verbundfestigkeit [N/mm²] ± Std. Abw. | 1,2 ± 0,4 | 1,8 ± 0,4 |
| **A 5** | Verbundfestigkeit [N/mm²] ± Std. Abw. | 2,1 ± 0,5 | 2,4 ± 0,9 |
| **A 6** | Verbundfestigkeit [N/mm²] ± Std. Abw. | 2,2 ± 0,5 | 2,9 ± 0,5 |
| **A7** | Verbundfestigkeit [N/mm²] ± Std. Abw. | 2,4 ± 0.4 | 3,3 ± 0,6 |
| **A 8** | Verbundfestigkeit [N/mm²] ± Std. Abw. | 2,4 ± 0,8 | 3,5 ± 0,6 |
| **A 9** | Verbundfestigkeit [N/mm²] ± Std. Abw. | 2,8 ± 0,3 | 3,9 ± 0,4 |

**Tabelle 7**

| Einfluß des MBS - Gehaltes im POM (Herstellung der Prüfstäbe nach Verfahren I) | | |
|---|---|---|
| | **Material 2** | **B 4** |
| | Tₘ [°C] | 200 |
| | T_{w} [°C] | 30 |
| | T_{einleg} [°C] | 140 |
| | pₐ [bar] | 80 |
| | vₑ [mm/sec] | 400 |

| **Material 1** | | |
|---|---|---|
| **A 1** | Verbundfestigkeit [N/mm²] ± Std. Abw. | 0,9 ± 0,2 |
| **A 11** | Verbundfestigkeit [N/mm²] ± Std. Abw. | 1,6 ± 0,3 |
| **A 12** | Verbundfestigkeit [N/mm²] ± Std. Abw. | 2,0 ± 0,4 |

**Tabelle 8**

| Einfluß des Comonomer - Gehaltes und - Types im POM (Herstellung der Prüfstäbe nach Verfahren II) | | |
|---|---|---|
| | **Material 2** | **B1** |
| | Tₘ [°C] | 200 |
| | T_{w} [°C] | 80 |
| | T_{einleg} [°C] | 155 |
| | Pₐ [bar] | 80 |
| | Vₑ [mm/sec] | 600 |

| **Material 1** | | |
|---|---|---|
| **A 14** | Verbundfestigkeit [N/mm²] ± Std. Abw. | 1,2 ± 0,4 |
| **A 13** | Verbundfestgkeit [N/mm²] ± Std. Abw. | 1,5 ± 0,3 |
| **A 1** | Verbundfestigkeit [N/mm²] ± Std. Abw. | 1,8 ± 0,4 |
| **A 15** | Verbundfesdgkeit [N/mm²] ± Std. Abw. | 2,2 ± 0,3 |

**Tabelle 9**

| Einfluß des Entformungsmittels und der Viskosität des TPE-U (Herstellung der Prüfstäbe nach Verfahren I) | | | | |
|---|---|---|---|---|
| | **Material 2** | **B 2** | **B 4** | **B 3** |
| | Tₘ [°C] | 200 | 200 | 200 |
| | T_{w} [°C] | 30 | 30 | 30 |
| | T_{einleg} [°C] | 140 | 140 | 140 |
| | pₐ [bar] | 80 | 80 | 80 |
| | vₑ [mm/sec] | 400 | 400 | 400 |

| **Material 1** | | | | |
|---|---|---|---|---|
| **A 2** | Verbundfestigkeit [N/mm²] ± Std. Abw. | 0,6 ± 0,3 | 0,7 ± 0.4 | 0,7 ± 0,3 |
| **A 6** | Verbundfestigkeit [N/mm²] ± Std. Abw. | 1,4 ± 0.5 | 1,3 ± 0,4 | 1,2 ± 0.2 |
| **A 7** | Verbundfestigkeit [N/mm²] ± Std. Abw. | 2,0 ± 0,4 | 2,1 ± 0,3 | 1,7 ± 0,4 |
| **A 16** | Verbundfestigkeit [N/mm²] ± Std. Abw. | -1,5 ± 0,6 | 1,3 ± 0.2 | 1,4 ± 0,4 |

**Tabelle 10**

| Einfluß des chemischen Aufbaus des TPE-U (Herstellung der Prüfstäbe nach Verfahren I) | | | | | |
|---|---|---|---|---|---|
| | **Material 2** | **B 1** | **B 2** | **B 5** | **B 6** |
| | Tₘ [°C] | 200 | 200 | 200 | 200 |
| | T_{w} [°C] | 30 | 30 | 30 | 30 |
| | T_{einleg} | 140 | 140 | 140 | 140 |
| | pₐ [bar] | 80 | 80 | 80 | 80 |
| | vₑ (mm/sec) | 400 | 400 | 400 | 400 |

| **Material 1** | | | | | |
|---|---|---|---|---|---|
| **A 2** | Verbundtestigkeit [N/mm²] ± Std. Abw. | keine Haftung | 0,6 ± 0.3 | 0,6 ± 0.2 | 0,5 ± 0.5 |
| **A 6** | Verbundtestigkeit [N/mm²] ± Std. Abw. | 2,3 ± 0.5 | 1,4 ± 0,5 | 1,6 ± 0.6 | 1,2 ± 0.5 |
| **A 7** | Verbundtestigkeit [N/mm²] ± Std. Abw. | 2.3 ± 0,7 | 2,0 ± 0,4 | 1.8 ± 0.5 | 1,4 ± 0,4 |
| **A 16** | Verbundtestigkeit [N/mm²] ± Std. Abw. | 2,5 ±0.4 | 1,5 ± 0,6 | 1,8 ± 0.5 | 1,5 ± 0,4 |

**Tabelle 11a**

| Einfluß der Härte des TPE-U (Herstellung der Prüfstäbe nach Verfahren I) | | | | |
|---|---|---|---|---|
| | **Material 2** | **B2** | **B 8** | **B 9** |
| | Tₘ [°C] | 200 | 200 | 220 |
| | T_{w} [°C] | 30 | 30 | 30 |
| | T_{einleg} [°C] | 140 | 140 | 140 |
| | pₐ [bar] | 80 | 80 | 80 |
| | vₑ [mm/sec] | 400 | 400 | 400 |

| **Material 1** | | | | |
|---|---|---|---|---|
| **A 2** | Verbundfestigkeit [N/mm²] ± Std.Abw. | 0,6 ± 0.3 | 1,9 ± 0.3 | - |
| **A 6** | Verbundfestigkett [N/mm²] ± Std. Abw. | 1,4 ± 0,5 | 2,6 ± 0.8 | 2,8 ± 1,0 |
| **A 7** | Verbundtestigkeit [N/mm²] ± Std. Abw. | 2,0 ± 0,4 | 2,4 ± 0.7 | 3,1 ± 0,4 |
| **A 16** | Verbundfestigkeit [N/mm²] ± Std.Abw. | 1,5 ± 0.6 | 2,0 ± 0.7 | 2,4 ± 1.8 |

**Tabelle 11b**

| Einfluß der Härte des TPE-U (Herstellung der Prüfstäbe nach Verfahren II) | | | | |
|---|---|---|---|---|
| | **Material 2** | **B 2** | **B 7** | **B 9** |
| | Tₘ [°C] | 200 | 215 | 225 |
| | T_{w} [°C] | 80 | 80 | 80 |
| | T_{einleg} [°C] | 155 | 155 | 155 |
| | pₐ [bar] | 80 | 80 | 80 |
| | Vₑ [mm/sec] | 600 | 600 | 600 |

| **Material 1** | | | | |
|---|---|---|---|---|
| **A 7** | Verbundfestigkeit [N/mm²] ± Std. Abw. | 2.5 ± 0.5 | 3,8 ± 1.0 | 6,4 ± 0.8 |

**Tabelle 12**

| **Einfluß des Verfahrens** | | | |
|---|---|---|---|
| | | **Verfahren I** | **Verfahren III** |
| | Tₘ [°C] | 200 | 200 |
| | T_{w} [°C] | 50 | 55 |
| | T_{einleg} [°C] | 140 | - |
| | pₐ [bar] | 80 | 80 |
| | vₑ [mm/sec] | 400 | 225 |
| **Material 1 = A 6** **Material 2 = B 1** | Verbundfestigkeit [N/mm²] ± Std. Abw. | 2,8 ± 0,7 | 3,6 ± 0,2 |
| | Tₘ [°C] | 200 | 200 |
| | T_{w} [°C] | 30 | 30 |
| | T_{einleg} [°C] | 140 | - |
| | pₐ [bar] | 80 | 50 |
| | vₑ [mm/sec] | 400 | 225 |
| **Material 1 = A 6** **Material 2 = B 2** | Verbundfestigkeit [N/mm²] ± Std. Abw. | 1,4 ± 0, 5 | 2,6 ± 0,2 |
| | Tₘ [°C] | 200 | 200 |
| | T_{w} [°C] | 30 | 55 |
| | T_{einleg} [°C] | 140 | - |
| | pₐ [bar] | 80 | 80 |
| | vₑ [mm/sec] | 400 | 225 |
| **Material 1 = A 6** **Material 2 = B 5** | Verbundfestigkeit [N/mm²] ± Std. Abw. | 1,6 ± 0,6 | 3,2 ± 0,4 |
| | Tₘ [°C] | 200 | 190 |
| | T_{w} [°C] | 50 | 30 |
| | T_{einleg} [°C] | 140 | - |
| | pₐ [bar] | 80 | 80 |
| | vₑ [mm/sec] | 400 | 225 |
| **Material 1 = A 6** **Material 2 = B 6** | Verbundfesbgkeit [N/mm²] ± Std. Abw. | 1 ,2 ± 0,5 | 3,8 ± 0,2 |
| | Tₘ [°C] | 220 | 220 |
| | T_{w} [°C] | 50 | 55 |
| | T_{einleg} [°C] | 140 | - |
| | pₐ [bar] | 80 | 80 |
| | vₑ [mm/sec] | 400 | 225 |
| **Material 1 = A 6** **Material 2 = B 9** | Verbundfestigkeit [N/mm²] ± Std. Abw. | 2,8 ± 1,0 | 15,6 ± 2,2 |

## Patentansprüche

1. Verfahren zur Herstellung eines Polyacetal-Elastomer-Verbundkörpers aus einem Formteil aus Polyacetal (Komponente a)) mit direkt angeformten Funktionselementen aus mindestens einem thermoplastisch verarbeitbaren Elastomeren, das aus einem thermoplastischen Polyurethan-Elastomeren besteht, aufgebaut aus steifen Urethansegmenten und flexiblen langkettigen Diolsegmenten, ausgewählt aus der Gruppe der Polyetherdiole, Polyesterdiole, Polyetheresterdiole und Polycarbonatdiole mit einer zahlenmäßig mittleren Molmasse im Bereich von 500 bis 5000 g/mol(Komponente b)), bei dem die Komponenten Polyacetal und Elastomer unterschiedliche Härte aufweisen, **dadurch gekennzeichnet, daß** zunächst das Material mit der höheren Härte (Komponente a)) in einem ersten Schritt in einem Formwerkzeug vorgespritzt wird, anschließend
entweder ausgekühlt und entformt wird und dann in eine andere größere Kavität eingelegt wird,
oder teilentformt wird, wobei es in einem Teil des Werkstücks verbleibt und dann in eine größere Kavität bewegt wird,
oder ohne Entformung in demselben Werkzeug, das durch eine bewegliche Vorrichtung vergrößert wird,
das gebildete Formteil aus der Komponente a) in einem zweiten Schritt durch Aufspritzen des Materials mit der geringeren Härte (Komponente b)) mit diesem haftend verbunden wird und dann als Verbundkörper entformt wird.

2. Verfahren nach Anspruch 1, **dadurch gekennzeichnet, dass** die Verbundfestigkeit bei Zugbelastung zwischen der Komponente a) und der Komponente b) mindestens 0,5 N/mm² beträgt.

3. Verfahren nach Anspruch 1 oder 2, **dadurch gekennzeichnet, daß** die Massetemperatur der Komponente a) im ersten Verfahrensschritt bei 180°C bis 240°C, vorzugsweise 190 bis 230°C, und die Werkzeugtemperatur bei 20°C bis 140°C liegt.

4. Verfahren nach einem oder mehreren der Ansprüche 1 bis 3, **dadurch gekennzeichnet, dass** das gebildete Formteil aus der Komponente a) vor dem Aufspritzen der Komponente b) entweder vor dem Einlegen in das andere Werkzeug im Bereich von 80°C bis vorzugsweise knapp unter dem Schmelzpunkt der Komponente a) vorgewärmt wird, oder in demselben Werkzeug nur soweit abgekühlt wird, dass ein heißer Vorspritzling weitenverarbeitet wird.

5. Verfahren nach einem oder mehreren der Ansprüche 1 bis 4. **dadurch gekennzeichnet dass** im zweiten Verfahrensschritt beim Einspritzen der Komponente b) die Massetemperatur im Bereich von 180°C bis 240°C und die Werkzeugtemperatur im Bereich von 20°C bis 100°C liegt.

6. Verfahren nach einem oder mehreren der Ansprüche 1 bis 5, **dadurch gekennzeichnet, dass** als Komponente a) ein Polyacetal Homo- oder Copolymerisat mit einem Schmelzindex (MFR-Wert 190/2,16 nach ISO 1133) von 0,5 bis 75 g/10 min eingesetzt wird.

7. Verfahren nach einem oder mehreren der Ansprüche 1 bis 6, dergestalt dass ein modifiziertes Polyacetal als Komponente a) eingesetzt wird.

8. Verfahren nach Anspruch 7, **dadurch gekennzeichnet, dass** die Komponente a) mit einem thermoplastischen Polyurethan-Elastomer, einem Methylmethacrylat/Butadien/Styrol-core-shell-Elastomer, Methylmethacrylat/ Acrylat-core-shell-Elastomer, einem Polycarbonat, einem Styrol/AcrylnitrilCopolymer oder einem Acrylat/Styrol/Acrylnitril-Copolymer Compound modifiziert ist.

9. Verfahren nach Anspruch 7, **dadurch gekennzeichnet, dass** die Komponente a) mit 1 bis 50 Gew.- % eines thermoplastischen Polyurethanelastomers, mit 1 bis 40 Gew.- % eines Methytmethacrylat/Butadien/Styrol-core-shell Elastomers oder mit einer Mischung der beiden modifiziert ist, wobei die Summe beider Modifikatoranteile im Bereich von 1 bis 50 Gew.- % liegt.

10. Verfahren nach Anspruch 1, **dadurch gekennzeichnet, dass** als langkettige Diolsegmente Polyester- oder Polyetherdiole eingesetzt werden.

11. Verfahren nach einem oder mehreren der Ansprüche 1 bis 10, **dadurch gekennzeichnet, dass** als Komponente b) Polyesterurethan- oder Polyetherurethan-Elastomere eingesetzt werden, die eine Härte von Shore A 65 bis Shore D 75 besitzen.

12. Verfahren nach einem oder mehreren der Ansprüche 1 bis 11, **dadurch gekennzeichnet, dass** die Komponente a) und b) übliche Zusatzstoffe enthalten.

13. Verfahren nach Anspruch 12, **dadurch gekennzeichnet, dass** als Zusatzstoffe Stabilisatoren, Nukleierungsmittel, Entformungsmittel, Gleitmittel, Füll-und Verstärkungsstoffe, Pigmente, Ruß, Licht- und Flammschutzmittel, Antistatika, Weichmacher oder optische Aufheller eingesetzt werden.

## Claims

1. A process for producing a polyacetal elastomer composite article from a molding made from polyacetal (component a)) with directly molded-on functional elements made from at least one thermoplastically processable elastomer which is composed of a thermoplastic polyurethane elastomer, built up from rigid urethane segments and flexible long-chain diol segments selected from the class consisting of polyetherdiols, polyesterdiols, polyetheresterdiols and polycarbonatediols with a number-average molar mass in the range from 500 to 5 000 g/mol (component b)), in which the components polyacetal and elastomer have differing hardness, wherein the material with the greater hardness (component a)) is initially pre-injected in a first step in a mold, and then
is either cooled and removed from the mold and then placed into another, larger cavity,
or is partially removed from the mold, but remains in a portion of the mold, and is then moved to a larger cavity,
or, without removal from the mold, remains in the same mold, which is enlarged by means of a movable device, and
in a second step, by overmolding with the material with the lesser hardness (component b)), the molding formed from component a) is firmly bonded to this material and is then removed from the mold as a composite article.

2. The process as claimed in claim 1, wherein the tensile strength of the bond between component a) and component b) is at least 0.5 N/mm².

3. The process as claimed in claim 1 or 2, wherein the melt temperature of component a) in the first step is from 180°C to 240°C, preferably from 190 to 230°C, and the mold temperature is from 20°C to 140°C.

4. The process as claimed in one or more of claims 1 to 3, wherein, before the overmolding with component b), the molding formed from component a) is either preheated in the range from 80°C to preferably just below the melting point of component a) before being placed into the other mold or, in the same mold, is cooled only to an extent which still gives a hot premolding for further processing.

5. The process as claimed in one or more of claims 1 to 4, wherein in the second step during injection of component b) the melt temperature is in the range from 180°C to 240°C and the mold temperature is in the range from 20°C to 100°C.

6. The process as claimed in one or more of claims 1. to 5, wherein component a) is a polyacetal homo- or copolymer with a melt index (MFR 190/2.16 in accordance with ISO 1133) of from 0.5 to 75 g/10 min.

7. The process as claimed in one or more of claims 1 to 6, in which a modified polyacetal is used as component a).

8. The process as claimed in claim 7, wherein component a) has been modified with a thermoplastic polyurethane elastomer, with a methyl methacrylate-butadiene-styrene core-shell elastomer, a methyl methacrylate-acrylate core-shell elastomer, with a polycarbonate, with a styrene-acrylonitrile copolymer or with an acrylate-styrene-acrylonitrile copolymer compound.

9. The process as claimed in claim 8, wherein component a) has been modified with from 1 to 50% by weight of a thermoplastic polyurethane elastomer, with from 1 to 40% by weight of a methyl methacrylate-butadiene-styrene core-shell elastomer or with a mixture of both, where the total of the proportions of both modifiers is in the range from 1 to 50% by weight.

10. The process as claimed in claim 1, wherein the long-chain diol segments used are polyesterdiols or polyetherdiols.

11. The process as claimed in one or more of claims 1 to 10, wherein polyesterurethane elastomers or polyetherurethane elastomers are used as component b) and have a hardness of from Shore A 65 to Shore D 75.

12. The process as claimed in one or more of claims 1 to 11, wherein component a) and component b) comprise conventional additives.

13. The process as claimed in claim 12, wherein the additives used are stabilizers, nucleating agents, mold-release agents, lubricants, fillers or reinforcing materials, pigments, carbon black, light stabilizers, flame retardants, antistats, plasticizers or optical brighteners.

## Revendications

1. Procédé pour la préparation d'un corps composite d'élastomère de polyacétal en une pièce façonnée en polyacétal (composant a)) avec des éléments fonctionnels façonnés directement sur ladite pièce en au moins un élastomère pouvant être transformé par voie thermoplastique, qui est constitué par un élastomère thermoplastique de polyuréthanne, élaboré à partir de segments d'uréthanne rigides et de segments diol souples à longue chaîne, choisis dans le groupe des polyétherdiols, des polyesterdiols, des polyétheresterdiols et des polycarbonatediols avec une masse molaire moyenne numérique dans la plage de 500 à 5000 g/mole (composant b)), dans lequel les composants polyacétal et élastomère présentent des duretés différentes, **caractérisé en ce que**, dans une première étape, on moule par injection au préalable d'abord le matériau avec la dureté la plus élevée (composant a)) dans un outil de moulage, ensuite,
on le refroidit et on le démoule et on le place dans une cavité plus grande,
ou on le démoule partiellement en le laissant dans une partie de l'outil, puis on le déplace dans une cavité plus grande,
ou, en le laissant sans démoulage dans le même outil, qui est agrandi par un dispositif mobile,
dans une deuxième étape, on relie de manière adhésive la pièce façonnée en composant a) en y moulant par injection le matériau présentant la dureté inférieure (composant b)) puis on démoule sous forme de corps composite.

2. Procédé selon la revendication 1, **caractérisé en ce que** la résistance du composite en cas d'une sollicitation par la traction entre le composant a) et le composant b) est d'au moins 0,5 N/mm².

3. Procédé selon la revendication 1 ou 2, **caractérisé en ce que** la température de la masse du composant a) dans la première étape de procédé est de 180°C à 240°C, de préférence de 190°C à 230°C, et la température de l'outil est de 20°C à 140°C.

4. Procédé selon l'une ou plusieurs des revendications 1 à 3, **caractérisé en ce que** la pièce façonnée formée, constituée par le composant a), avant le moulage par l'injection du composant b), est préchauffée avant le placement dans l'autre outil dans la plage de 80°C jusqu'à de préférence légèrement au-dessous du point de fusion du composant a) ou n'est refroidie dans le même outil que de manière à transformer une ébauche moulée chaude.

5. Procédé selon l'une ou plusieurs des revendications 1 à 4, **caractérisé en ce que** dans la deuxième étape de procédé, lors du moulage par injection du composant b), la température de la masse se situe dans la plage de 180°C à 240°C et la température de l'outil se situe dans la plage de 20°C à 100°C.

6. Procédé selon l'une ou plusieurs des revendications 1 à 5, **caractérisé en ce qu'**on utilise comme composant a) un homopolymère ou copolymère de polyacétal présentant un indice de fusion (valeur MFR 190/2,16 selon ISO 1133) de 0,5 à 75 g/10 min.

7. Procédé selon l'une ou plusieurs des revendications 1 à 6, **caractérisé en ce qu'**on utilise comme composant a) un polyacétal modifié.

8. Procédé selon la revendication 7, **caractérisé en ce que** le composant a) est modifié avec un élastomère thermoplastique de polyuréthanne, un élastomère noyau-enveloppe de méthacrylate de méthyle/butadiène/styrène, un élastomère noyau-enveloppe de méthacrylate de méthyle/acrylate, un polycarbonate, un copolymère de styrène/acrylonitrile ou un composite de copolymère d'acrylate/styrène/acrylonitrile.

9. Procédé selon la revendication 7, **caractérisé en ce que** le composant a) est modifié avec 1 à 50% en poids d'un élastomère thermoplastique de polyuréthanne avec 1 à 40% en poids d'un élastomère noyau-enveloppe de méthacrylate de méthyle/butadiène/styrène ou avec un mélange des deux, la somme des deux proportions d'agent de modification se situant dans la plage de 1 à 50% en poids.

10. Procédé selon la revendication 1, **caractérisé en ce qu'**on utilise comme segments diol à longue chaîne des polyesterdiols ou des polyétherdiols.

11. Procédé selon l'une ou plusieurs des revendications 1 à 10, **caractérisé en ce qu'**on utilise comme composant b) des élastomères de polyesteruréthanne ou de polyétheruréthanne, qui présentent une dureté de Shore A 65 à Shore D 75.

12. Procédé selon l'une ou plusieurs des revendications 1 à 11, **caractérisé en ce que** les composants a) et b) contiennent des additifs usuels.

13. Procédé selon la revendication 12, **caractérisé en ce qu'**on utilise comme additifs des stabilisants, des agents de nucléation, des agents de démoulage, des lubrifiants, des charges et des substances de renforcement, des pigments, de la suie, des agents de protection contre la lumière et les flammes, des agents antistatiques, des plastifiants ou des azurants optiques.
